# EUROPEAN PATENT SPECIFICATION

(11) **EP 4 205 352 B1**
(45) Date of publication and mention of the grant of the patent: **07.10.2026**
(21) Application number: 21715354.3
(22) Date of filing: 26.02.2021
(51) Int. Cl.: H04L 9/40

(54) **METHODS, SYSTEMS, AND COMPUTER READABLE MEDIA FOR ROUTING OF PACKETS FOR LAWFUL INTERCEPTION**
VERFAHREN, SYSTEME UND COMPUTERLESBARE MEDIEN ZUM ROUTEN VON PAKETEN FÜR LEGALES ABFANGEN
PROCÉDÉS, SYSTÈMES ET SUPPORTS LISIBLES PAR ORDINATEUR POUR ACHEMINER DES PAQUETS EN VUE D'UNE INTERCEPTION LÉGALE

(30) Priority: 29.08.2020 US 202017006800
(43) Date of publication of application: 05.07.2023
(73) Proprietor: Oracle International Corporation, Redwood Shores, CA 94065 (US)
(72) Inventor: GROVER, Lalit, Gurgaon, Haryana 122011 (IN); SHRIMALI, Jayesh, Hyderabad, Telangana 500075 (IN); TEWARI, Vimal Chandra, Bangalore, Karnataka 560103 (IN)
(74) Representative: Gill Jennings & Every LLP
(86) International application number: PCT/US2021/020117
(87) International publication number: WO 2022/046169

(56) References cited:
- US-A1- 2011 141 947
- MENGHUI YANG ET AL: "Implementation and Performance for Lawful Intercept of VoIP Calls based on SIP Session Border Controller", COMPUTER AND INFORMATION TECHNOLOGY (CIT), 2010 IEEE 10TH INTERNATIONAL CONFERENCE ON, IEEE, PISCATAWAY, NJ, USA, 29 June 2010 (2010-06-29), pages 2635 - 2642, XP031757708, ISBN: 978-1-4244-7547-6
- "Lawful Interception (LI); Interception domain Architecture for IP networks; ETSI TR 102 528", TECHNICAL REPORT, EUROPEAN TELECOMMUNICATIONS STANDARDS INSTITUTE (ETSI), 650 ROUTE DES LUCIOLES, SOPHIA ANTIPOLIS CEDEX, F-06921, FRANCE, no. V1.1.1, 1 October 2006 (2006-10-01), XP014035376

## Description

### PRIORITY CLAIM

This application claims the priority benefit of U.S. Publication No. US 2022/070226 A1, published 3 March 2022.

### TECHNICAL FIELD

The subject matter described herein relates to methods and systems for routing of packets for lawful interception (LI). More particularly, the subject matter described herein relates to methods, systems, and computer readable media for routing of packets for LI in centralized networks.

### BACKGROUND

Some telecommunications network operators deploy centralized networks to offer session based communication services over IP (voice or multimedia) to users from multiple countries. These networks can use Session Border Controllers (SBCs) that usually sit between two service provider networks (i.e. interconnect/peering SBCs), or between an access network and a backbone network (i.e. access SBCs) to provide services to residential and/or enterprise customers. These SBCs are typically deployed at the border between two voice over IP (VoIP) networks, and hence can be a good location to implement a lawful intercept solution.

Enabling lawful interception in the centralized networks can require provisioning of warrants (legally permitted interception targets and associated rules) on access Session Border Controllers deployed outside the respective country. There are regulatory requirements in some countries that prohibit this practice since warrants are considered sensitive information.

Accordingly, there exists a need for methods, systems, and computer readable media for routing of packets for LI in centralized networks.

In MENGHUI YANG ET AL: "Implementation and Performance for Lawful Intercept of VoIP Calls based on SIP Session Border Controller", COMPUTER AND INFORMATION TECHNOLOGY (CIT), 2010 IEEE 10TH INTERNATIONAL CONFERENCE ON, IEEE, PISCATAWAY, NJ, USA, 29 June 2010, pages 2635-2642, XP031757708, ISBN: 978-1-4244-7547-6, an intercept architecture using session border controller is proposed.

In US 2011/141947 A1, a method and a system provide integrated lawful intercept for both packet data and session initiation protocol (SIP)-based applications.

In "Lawful Interception (LI); Interception domain Architecture for IP networks; ETSI TR 102 528", TECHNICAL REPORT, EUROPEAN TELECOMMUNICATIONS STANDARDS INSTITUTE (ETSI), 650 ROUTE DES LUCIOLES, SOPHIA ANTIPOLIS CEDEX, F-06921, FRANCE, no. V1 .1.1, 1 October 2006, XP014035376, a high level reference architecture for supporting lawful interception in network operator and communication service providers is described.

### SUMMARY

Methods, systems, and computer readable media for routing of packets for lawful interception. In one aspect, a system includes at least one session border controller (SBC), wherein the at least one SBC is configured for forwarding a plurality of media streams to a forwarding function. The system includes the forwarding function, implemented on a centralized node for a telecommunications network, the centralized node comprising one or more processors. The forwarding function is configured for receiving the plurality of media streams and forwarding each media stream to a respective lawful intercept mediation server for at least one country associated with the media stream.

The forwarding function is configured for, in response to receiving a first packet of a first media stream from the at least one SBC, performing a destination lookup for the first media stream and sending a mediation server identifier for the first media stream to the at least one SBC. The at least one SBC is configured for storing the mediation server identifier and sending the mediation server identifier to the forwarding function with each subsequent packet of a plurality of subsequent packets for the first media stream.

In some examples, the forwarding function is configured for, in response to receiving the subsequent packets, using the mediation server identifier to route each subsequent packet of the subsequent packets to a first lawful intercept mediation server identified by the mediation server identifier. The at least one SBC can be configured for sending, with the first packet and the subsequent packets of the first media stream, a first correlation identifier for the first media stream.

The forwarding function can be configured for associating the first correlation identifier for the first media stream to the mediation server identifier in a mapping of correlation identifiers to the lawful intercept mediation servers. The forwarding function can be configured for, in response to receiving a second packet including a second correlation identifier and lacking a mediation server identifier, using the mapping of correlation identifiers to route the second packet to a second lawful intercept mediation server associated with the second correlation identifier in the mapping of correlation identifiers.

In some examples, the first packet of the first media stream is a signaling packet establishing the first media stream and each subsequent packet of the subsequent packets is a media packet. In general, subsequent packets can either be signaling or media packets. In some examples, the at least one SBC is an access SBC configured for providing access to a telecommunications service provider access network.

In another aspect, a system includes at least one session border controller (SBC), wherein the at least one SBC is configured for forwarding a plurality of media streams to a forwarding function. The system includes the forwarding function, implemented on a centralized node for a telecommunications network, the centralized node comprising one or more processors. The forwarding function is configured for receiving the plurality of media streams and forwarding each media stream to a respective lawful intercept mediation server for at least one country associated with the media stream.

The at least one SBC is configured for sending, with a first packet and a plurality of subsequent packets of a first media stream, a first correlation identifier for the first media stream.

The forwarding function is configured for, in response to receiving the first packet, performing a destination lookup for the first media stream and associating the first correlation identifier for the first media stream to a mediation server identifier in a mapping of correlation identifiers to the lawful intercept mediation servers. The at least one SBC is configured for sending a second packet of the first media stream with a session release indicator to the forwarding function in response to determining that the first media stream is terminating.

In some examples, the forwarding function is configured for receiving the session release indicator and, in response to receiving the session release indicator, deleting an association between the first correlation identifier for the first media stream and the mediation server identifier in the mapping of correlation identifiers to the lawful intercept mediation servers.

The forwarding function can be configured for, in response to receiving the subsequent packets, using the mediation server identifier to route each subsequent packet of the subsequent packets to a first lawful intercept mediation server identified by the mediation server identifier.

The forwarding function can be configured for, in response to receiving a second packet including a second correlation identifier and lacking a mediation server identifier, using the mapping of correlation identifiers to route the second packet to a second lawful intercept mediation server associated with the second correlation identifier in the mapping of correlation identifiers.

In some examples, the first packet of the first media stream is a signaling packet establishing the first media stream and wherein each subsequent packet of the subsequent packets is a media packet. In some examples, the at least one SBC is an access SBC configured for providing access to a telecommunications service provider access network.

In another aspect, a system includes at least one session border controller (SBC), wherein the at least one SBC is configured for forwarding a plurality of media streams to a forwarding function. The system includes the forwarding function, implemented on a centralized node for a telecommunications network, the centralized node comprising one or more processors. The forwarding function is configured for receiving the plurality of media streams and forwarding each media stream to a respective lawful intercept mediation server for at least one country associated with the media stream.

The at least one SBC is configured for sending, with a first packet of a first media stream, a first direction indicator to the forwarding function, the first direction indicator specifying whether first packet is an inbound initial request or an outbound initial request. The forwarding function is configured for, in response to receiving the first packet, performing a destination lookup for the first media stream using the first direction indicator.

In some examples, the forwarding function is configured for performing the destination lookup using an originating user identity for the first packet in response to determining that the first direction indicator specifies an inbound initial request. The forwarding function can be configured for performing the destination lookup using a terminating user identity for the first packet in response to determining that the first direction indicator specifies an outbound initial request.

The at least one SBC can be configured for sending, with the first packet and a plurality of subsequent packets of a first media stream, a first correlation identifier for the first media stream.

The forwarding function can be configured for, in response to receiving the first packet, associating the first correlation identifier for the first media stream to a mediation server identifier in a mapping of correlation identifiers to the lawful intercept mediation servers. The forwarding function is configured for, in response to receiving the subsequent packets, using the mediation server identifier to route each subsequent packet of the subsequent packets to a first lawful intercept mediation server identified by the mediation server identifier.

In some examples, the first packet of the first media stream is a signaling packet establishing the first media stream and each subsequent packet of the subsequent packets is a media packet. In general, subsequent packets can either be signaling or media packets.

The subject matter described herein can be implemented in software in combination with hardware and/or firmware. For example, the subject matter described herein can be implemented in software executed by a processor. In one example implementation, the subject matter described herein may be implemented using a computer readable medium having stored thereon computer executable instructions that when executed by the processor of a computer control the computer to perform steps.

Example computer readable media suitable for implementing the subject matter described herein include non-transitory devices, such as disk memory devices, chip memory devices, programmable logic devices, and application specific integrated circuits. In addition, a computer readable medium that implements the subject matter described herein may be located on a single device or computing platform or may be distributed across multiple devices or computing platforms.

### BRIEF DESCRIPTION OF THE DRAWINGS

Figure 1 is a block diagram of an example network environment for routing of packets for lawful interception;
Figure 2 is a block diagram of an example network environment for establishing lawful intercept of an example call;
Figure 3 is a block diagram illustrating example packets sent for an example of packet forwarding for lawful interception; and
Figure 4 is a flow diagram of an example method for routing of packets for lawful interception at an example forwarding function.

### DETAILED DESCRIPTION

Telecommunications network equipment providers can enhance network nodes (e.g., SBCs) so as to replicate signaling (e.g., SIP) and media (e.g. RTP, MSRP) traffic passing through them to LI mediation servers (hereinafter referred to as LI-MS) deployed in the respective countries, i.e., the countries of the originating/calling and terminating/called users. This allows warrants to stay within each country's network, and thus they can easily be controlled and administered locally by each country's Law enforcement agencies (LEA).

The module/function that is responsible for forwarding these packets to each country's LI-MS is hereinafter referred to as a Forwarding Function (FF). The FF would typically require destination and route lookup rules to be provisioned so as to determine the destination country (and its LI-MS) based on the originating/terminating user identities from the signaling packets.

The centralized network typically comprises of hundreds of access/interconnect SBCs (which can be referred to as Replication Nodes or RN), and can cater to tens of countries. Implementing FF on the RNs would require the routing rules to be configured and maintained on all these nodes, besides having to manage too many connections.

It can therefore be useful to deploy a separate and dedicated network node, a centralized FF that terminates packets from all the Replication nodes, and forwards them to the respective country's LI-MS, even if it means additional traffic between RNs and FF.

In this approach, RNs embed the original signaling and media packets into outer packets sent to FF. The FF, in turn, performs a destination lookup for each session and forwards all packets in that session to an LI-MS. This RN-FF interface can use any proprietary or standard protocol such as Diameter, SIP, or IPFIX (Internet Protocol Flow Information Export).

There would typically be a single connection/stream (one each for signaling and media) from each RN to FF, carrying all the replicated signaling and media packets from multiple connections/streams on that RN.

In the centralized FF approach, a challenge is to correlate the signaling and media streams on FF for all the traffic from all the RNs. The correlation is required since the media packets typically lack the required information to perform a destination lookup. They have to be routed towards an LI-MS that has previously been determined for the signaling packets that established the session to which these media packets belong.

The FF can be configured to handle the embedded signaling packets, and also maintain information about all the replicated signaling and media streams so it can correlate the two. In some examples, the FF can also send a correlation ID along with each signaling and media packet from RN to FF.

RNs (e.g., SBCs) in some examples store this correlation and hence the additional overhead to also send this information may be minimal. The correlation ID along with the RN identity can uniquely identify a replicated stream on the FF.

This allows the FF to create and maintain an association/mapping between Correlation ID (uniquely identifying a particular stream/dialog) and a destination route towards the corresponding LI-MS. The mapping is created when the first signaling packet for a new session arrives at the FF.

Although this approach saves FF from parsing all packets in a session and performing the destination lookup, it still needs the FF to perform a lookup in the Correlation ID -> LI-MS map. This could be a per-RN map or a global map if the Correlation ID is globally unique across all RNs. Since the FF is required to handle traffic from hundreds of RNs, each hosting millions of subscribers, it could easily become the bottleneck.

The systems described in this specification can improve the system architecture described above using one or more of the following three features:
1) Improved Forwarding Logic at FF
   This feature is realized by:
      - Sending back an LI-MS identifier (MS-ID) from FF to RNs after destination lookup is performed for the first packet of a new dialog; and
      - Storing this MS-ID at a replication node or an access SBC (A-SBC) and sending it along with Correlation ID in each subsequent packet for that session towards FF.
   Upon the arrival of a packet, the FF would look for the presence of MS-ID in the outer packet (e.g. IPFIX). If it is present, the packet can be directly forwarded towards the relevant LI-MS without having to do the Correlation ID lookup or parsing the embedded packet. Any packets that arrive at FF without the MS-ID can fall back to Correlation ID lookup.
2) Improved Cleanup of CorrelationID-> MS-ID mapping
   The FF would typically be configured to determine dialog terminations (e.g. SIP BYE/CANCEL) so it can remove the Correlation ID -> MS-ID association/mapping. This can potentially require parsing of all the signaling packets which will be an additional overhead for FF that has to handle millions of packets/sec from all RNs.
   This feature can relieve this burden by sending a 'SessionRelease' flag as additional metadata with every packet from RNs to FF. RNs already track the sessions and hence, have this information available while replicating packets to FF. The FFs then only need to keep a watch on this flag in the outer packet instead of parsing every 'embedded' signaling packet, thus saving a lot of CPU cycles.
3) Prevent unnecessary replication when the originating and recipient users are from different countries
   Some network nodes (e.g., SBCs) maintain two separate legs for every session, i.e., one with the client and the other with the server. These are also referred to as client and server dialogs.

In case of call forking, there could be more than one dialog with the server. The packets that come to these SBCs (or any other proxy nodes) are, at times, expected to be modified before they are sent out on the other side. It is therefore useful to separately replicate packets from all the dialogs of a session.

In the centralized LI architecture, if the originating and terminating users of a session are from different countries, the originating country would be interested in packets coming from or going towards their users, and would prefer not to receive the packets going towards or coming from the terminating user.

The features described in this section would enable the FF to selectively look up and determine an MS-ID for different dialogs of the same session by having RNs also send a 'Direction' flag to FF. The 'Direction (ingress/egress)' flag with signaling packets that establish a new dialog (e.g. SIP INVITE) helps the FF to determine whether the packet belongs to an ingress or egress leg of the call at RN, and accordingly use the calling or called user identity (e.g. SIP FROM/TO header) for destination lookup.

This way, the FF associates different countries (or MS-IDs) to different dialogs of the same session thereby replicating the packets from only the relevant dialog to each country's LI-MS. In the absence of this flag, the FF could still prevent unnecessary replication but only when both the originating and terminating users belong to the same country. The proposed flag helps achieve it even when the users are from different countries.

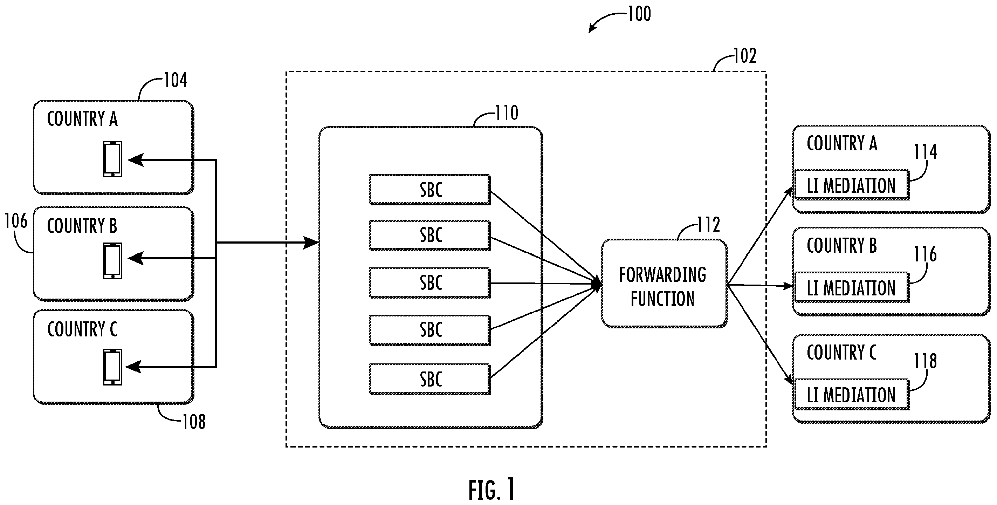

Figure 1 is a block diagram of an example network environment **100** for routing of packets for lawful interception. Network environment **100** includes a centralized telecommunications network **102** providing telecommunications services for a number of different networks **104, 106,** and **108** in different countries. Centralized telecommunications network **102** includes a number of Session Border Controllers (SBCs) **110** and a forwarding function 112. Forwarding function **112** is implemented on a centralized computing node having one or more processors.

In general, an SBC is a system of one or more computers configured, by virtue of appropriate programming, to control signaling and media streams used in setting up, conducting, and tearing down telephone calls and other types of media communications. For example, SBC can control voice over internet protocol (VoIP) calls.

SBCs can be deployed, in some cases, on a border between two service provider networks in a peering environment, or between a service provider's access network and a backbone network to provide service to the service provider's customers.

SBCs **110** are configured for forwarding media streams, e.g., voice and video calls and other types of media, to forwarding function 112. Forwarding function **112** is configured for receiving the media streams and forwarding each media stream to a respective lawful intercept mediation server (one of servers **114, 116,** and **118)** for at least one country associated with the media stream. In some examples, forwarding function **112** is implemented as an enhanced SBC.

Centralized telecommunications network **102** can be configured to realize one, two, or three of the three features described above as follows:
1. Improved Forwarding Logic at Forwarding Function 112
   In some examples, forwarding function **112** is configured for, in response to receiving a first packet of a first media stream from one of SBCs **110,** performing a destination lookup for the first media stream and sending a mediation server identifier for the first media stream to the SBC. The SBC is configured for storing the mediation server identifier and sending the mediation server identifier to forwarding function **112** with each subsequent packet of the first media stream.
   In some examples, forwarding function **112** is configured for, in response to receiving the subsequent packets, using the mediation server identifier to route each subsequent packet of the subsequent packets to a first lawful intercept mediation server identified by the mediation server identifier. The SBC can be configured for sending, with the first packet and the subsequent packets of the first media stream, a first correlation identifier for the first media stream. The forwarding function can be configured for associating the first correlation identifier for the first media stream to the mediation server identifier in a mapping of correlation identifiers to the lawful intercept mediation servers. Forwarding function **112** can be configured for, in response to receiving a second packet including a second correlation identifier and lacking a mediation server identifier, using the mapping of correlation identifiers to route the second packet to a second lawful intercept mediation server associated with the second correlation identifier in the mapping of correlation identifiers.
2. Improved Cleanup of CorrelationID-> MS-ID mapping
   In some examples, one of SBCs **110** is configured for sending, with a first packet and a number of subsequent packets of a first media stream, a first correlation identifier for the first media stream. Forwarding function **112** is configured for, in response to receiving the first packet, performing a destination lookup for the first media stream and associating the first correlation identifier for the first media stream to a mediation server identifier in a mapping of correlation identifiers to the lawful intercept mediation servers. The SBC is configured for sending a second packet of the first media stream with a session release indicator to the forwarding function in response to determining that the first media stream is terminating.
   In some examples, forwarding function 112 is configured for receiving the session release indicator and, in response to receiving the session release indicator, deleting an association between the first correlation identifier for the first media stream and the mediation server identifier in the mapping of correlation identifiers to the lawful intercept mediation servers. Forwarding function 112 can be configured for, in response to receiving the subsequent packets, using the mediation server identifier to route each subsequent packet of the subsequent packets to a first lawful intercept mediation server identified by the mediation server identifier.
   Forwarding function 112 can be configured for, in response to receiving a second packet including a second correlation identifier and lacking a mediation server identifier, using the mapping of correlation identifiers to route the second packet to a second lawful intercept mediation server associated with the second correlation identifier in the mapping of correlation identifiers. This could happen, for example, if the second packet is part of the same stream but lacks the mediation server identifier due to an error. In some examples, the second packet is part of a new stream, e.g., the second packet is an initiating packet of a new stream, and forwarding function 112 will not be able to use the mapping of correlation identifiers to route the second packet; instead, forwarding function 112 will perform a destination lookup and create a new association in the mapping for the new stream.
3. Prevent unnecessary replication when the originating and recipient users are from different countries
   In some examples, one of SBCs **110** is configured for sending, with a first packet of a first media stream, a first direction indicator to forwarding function 112, the first direction indicator specifying whether first packet is an inbound initial request or an outbound initial request. Forwarding function 112 is configured for, in response to receiving the first packet, performing a destination lookup for the first media stream using the first direction indicator.
   In some examples, forwarding function 112 is configured for performing the destination lookup using an originating user identity for the first packet in response to determining that the first direction indicator specifies an inbound initial request. Forwarding function 112 can be configured for performing the destination lookup using a terminating user identity for the first packet in response to determining that the first direction indicator specifies an outbound initial request.

The SBC can be configured for sending, with the first packet and a plurality of subsequent packets of a first media stream, a first correlation identifier for the first media stream. Forwarding function 112 can be configured for, in response to receiving the first packet, associating the first correlation identifier for the first media stream to a mediation server identifier in a mapping of correlation identifiers to the lawful intercept mediation servers. Forwarding function 112 is configured for, in response to receiving the subsequent packets, using the mediation server identifier to route each subsequent packet of the subsequent packets to a first lawful intercept mediation server identified by the mediation server identifier.

In some examples, forwarding function 112 is implemented on an SBC platform or system. The SBC acting as a centralized forwarding function is configured to perform routing of signaling and media packets to a lawful intercept mediation server.
- Signaling packets will be routed based on the routing rules/policies configured at forwarding function 112. These lookups can be done at the host application. In some cases, as described further in this specification, only the first signaling packet of a new session will be routed based on policy lookup at the host. All subsequent signaling packets should also be routed as described further below.
- A module is configured to implement this functionality on the SBC
   - This module should be IPFIX-aware since it will receive/send an IPFIX packet.
   - This module needs to be SIP-aware since it needs to decode SIP headers from the SIP packet embedded within the IPFIX packet, and then perform a lookup.
   - It will also manage the session mappings at platform so as to allow routing of subsequent signaling and/or media packets through the fastpath.
- Routing Rules shall specify the
   - SIP header name to extract the number from (e.g. From, To, Referred-By, Refer-To, R-URI, Diversion Header)
   - Number prefix for lookup
   - Destination ME as next-hop
- In some examples, routing will be based on CGPN for ingress packets (i.e. packets coming to A-SBC) and CDPN for egress packets (i.e. packets going out of A-SBC)

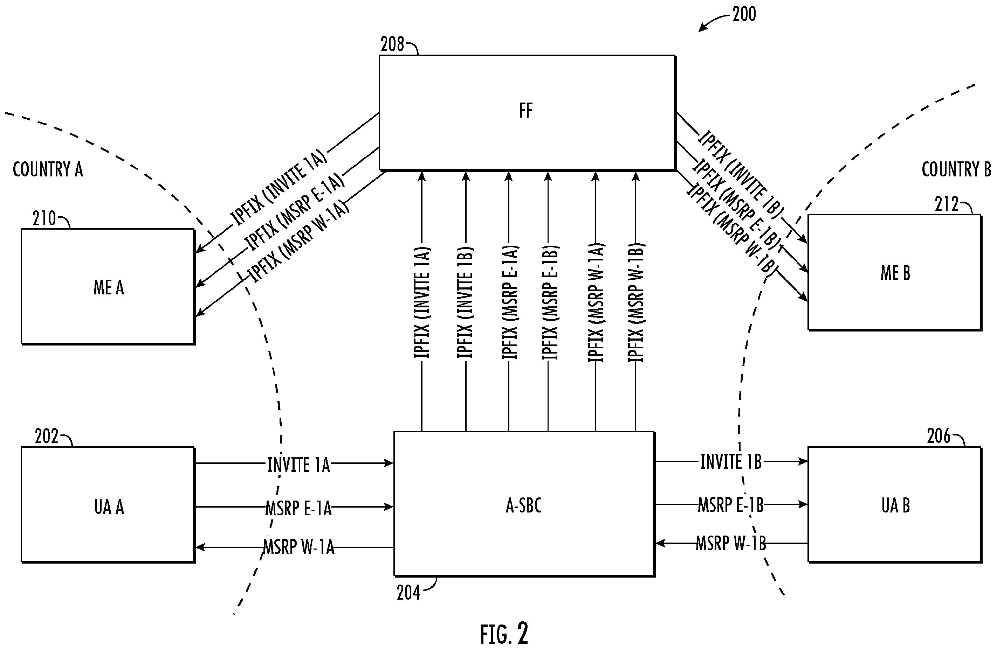

Figure 2 is a block diagram of an example network environment **200** for establishing lawful intercept of an example call.

As shown in Figure 2, a first user device **202** ("UA A") in country A initiates a call with a second user device **206** ("UA B") in country B via an access SBC **204** (A-SBC). Messages flowing towards country A are labelled as going "west" and messages flowing towards country B are labelled as going "east."

SBC **204** forwards the packets in the media stream of the call to a centralized forwarding function **208.** Forwarding function **208** forwards packets sent by user device **202** to a lawful intercept mediation server **210** ("ME A") for country A, and forwarding function **208** forwards packets sent to user device **206** to a lawful intercept mediation server **212** ("ME B") for country B. Although the example of Figure 2 shows packets going east, the system can operate similarly for packets going west or, in general, in any other direction.

The example shown in Figure 2 depicts the actions performed at SBC **204** and forwarding function **208** for session initiation protocol (SIP) and message session relay protocol (MSRP).

In a first step, user device **202** sends Invite 1A to SBC **204.** SBC **204** performs the following actions:
▪ Add a unique correlation ID (e.g., randomly generated) to a IPFIX packet and send to forwarding function **208** as IPFIX (Invite 1A).
▪ While creating media flows, the system will add Correlation ID and "ingress" direction indicator.

In a second step, forwarding function **208** performs the following actions:
▪ Route lookup based on 'FROM' header (because the direction indicator is ingress) and find the Dest Flow
▪ Add a mapping for correlation ID (From IPFIX) => Dest Flow
▪ Update the ingress media flow (corresponding to the ASBC config) with a new mapping for correlation ID => Dest Flow

In a third step, SBC **204** sends Invite 1B to user device **206** and IPFIX (Invite 1B) to forwarding function **208.** SBC **204** performs the following actions:
- Add a unique correlation ID and an 'egress' flag to IPFIX packet and send to the FF

In a fourth step, forwarding function **208** performs the following actions:
▪ Lookup based on 'TO' header and find the Destination Flow
▪ Add a mapping for correlation ID (from IPFIX) => Dest Flow
▪ Update the ingress media flow (corresponding to ASBC config) with a new mapping for correlation ID => Dest Flow

In a fifth step, user device **202** sends MSRP E-1A to SBC **204,** and SBC **204** sends MSRP E-1B to user device **206.** SBC **204** performs the following actions:
▪ SBC **204** adds correlation ID to the IPFIX packet and send to FF

In a sixth step, SBC **204** sends IPFIX (MSRP E-1A) and IPFIX (MSRP E-1B) to forwarding function **208.** Forwarding function **208** performs the following actions:
- Lookup based on correlation ID in the IPFIX to determine the Dest Flow

In a seventh step, User device **206** sends MSRP W-1B to SBC **204** and SBC **204** sends MSRP W-1A to user device **202.** SBC **204** performs the following actions:
- The system will add correlation ID to the IPFIX packet and send to FF

In an eighth step, SBC **204** sends IPFIX (MSRP W-1A) and IPFIX (MSRP W-1B) to forwarding function **208.** Forwarding function **208** performs the following actions:
- Lookup based on correlation ID in the IPFIX to determine the Dest Flow

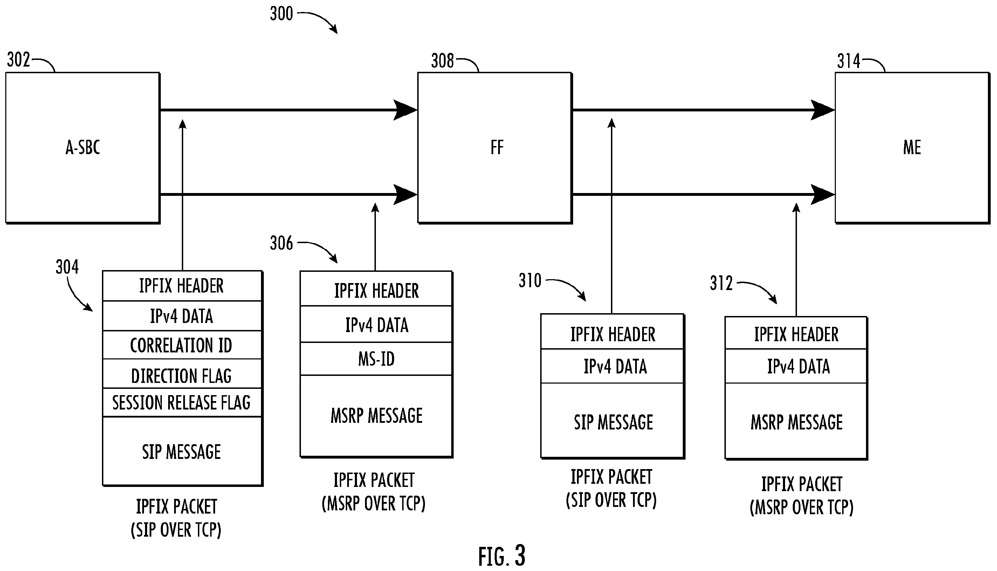

Figure 3 is a block diagram illustrating example packets sent for an example of packet forwarding **300** for lawful interception.

As shown in Figure 3, an access SBC **302** forwards a first packet **304** and a subsequent packet **306** to a forwarding function **308.** The forwarding function **308** forwards packets **304** and **306** to a lawful intercept mediation server **314** by sending modified packets **310** and **312.**

Packet **304** is an IPFIX packet, and in particular, SIP over transmission control protocol (TCP). Packet **304** includes an IPFIX header and IPv4 data. Packet **304** also includes a correlation ID, a direction flag, and a session release flag. Packet **304** includes an SIP message.

Packet **306** is an IPFIX packet, and in particular, MSRP over TCP. Packet **306** includes an IPFIX header and IPv4 data. Packet **306** includes a mediation server identifier, which was stored at SBC **302** after forwarding function **308** performed a destination lookup for packet **304.** Packet **306** includes an MSRP message.

When forwarding function **308** receives packet **304** from SBC **302,** forwarding function **308** performs a destination lookup to determine that lawful intercept mediation server **314** is the destination for packet **304** and subsequent packets belonging to the same media stream as packet **304,** such as packet **306.** Forwarding function **308** stores an association between the correlation ID and a mediation server identifier for lawful intercept mediation server **314** in a mapping of correlation identifiers to lawful intercept mediation servers. Forwarding function **308** also sends the mediation server identifier to SBC 302.

Forwarding function **308** generates packet **310** based on packet **304** and sends packet **310** to lawful intercept mediation server **314.** Packet **310** is an IPFIX packet, SIP over TCP. Packet **310** includes the IPFIX header, IPv4 data, and SIP message of packet **304.** Packet **310** lacks the correlation ID, direction flag, and session release flag of packet **304.**

When forwarding function **308** receives packet **306** from SBC **302,** forwarding function **308** can avoid checking the mapping of correlation identifiers to lawful intercept mediation servers. Instead, forwarding function **308** uses the mediation server identifier in packet **306** to route packet **306.**

Forwarding function **308** generates packet **312** based on packet **306** and sends packet **312** to lawful intercept mediation server **314.** Packet **312** is an IPFIX packet, MSRP over TCP. Packet **312** includes the IPFIX header, IPv4 data, and MSRP message of packet **306.** Packet **312** lacks the mediation server identifier of packet **306.**

In some examples, new set IDs and templates are used to implement the features described in this specification. For example, a common template can be used for replicating both ingress and egress signaling packets at SBC **302.**
- "Direction flag" shall indicate whether this is an ingress or egress packet
- Forwarding function **308** shall use this flag to determine which SIP header (for Calling or Called Number) it has to use for routing lookup
- "SessionRelease" flag shall indicate whether call session cleanup is required on FF.

Similarly, a common template can be used for replicating both ingress and egress media packets at SBC **302.** The direction flag is not required for MSRP media IPFIX packets since the forwarding function will use the correlation identified to determine a destination lawful intercept mediation server; it will also not need the session release flag.

To facilitate session cleanup at forwarding function **308,** forwarding function **308** shall clear/erase the saved dialog information (e.g. correlation ID -> Dest Flow mapping) when it receives an IPFIX packet with "SessionRelease" flag set.

In some examples, there is also a timer implemented at forwarding function **308** to clean up the sessions at forwarding function **308** to handle cases when the IPFIX packet, with the "SessionRelease" flag set, gets dropped for some reason.
- This can also happen if the A-SBC reboots in the middle of a session
- The timer shall be cancelled/stopped on receipt of the IPFIX packet with 'SessionRelease' flag set.

Regarding the correlation ID, a unique Correlation (or Replication) ID can be sent from SBC **302** to forwarding function **308.** This shall uniquely identify each dialog on SBC **302** or even on forwarding function **308** (e.g., if the ID also includes the A-SBC hostname).
- This is per-Dialog and not per-Session so as to handle the forking scenarios where there can be multiple client dialogs each being replicated to a different country's ME

There are various options to generate this ID at SBC 302:
- Option 1 : Use media-specific information from packets
   - This requires a separate approach for every media type and can be cumbersome to implement.
   - For offer-less INVITEs, this requires parsing of each signaling packet until media info is not received.
- Option 2: Use Media Flow Identifier. At times, this may not be a plausible solution because
   - Media Flow Identifier cannot be used in case of offer-less INVITEs.
   - After switchover of A-SBC, the Media Flow Identifier (locally generated) would change for the same session. So they will need to be replicated
   - When A-SBCs are deployed in standalone mode, mechanism need to be built to ensure that the same ID is not used for a different session across reboots
- Option 3: Use randomly generated unique ReplicationId
   - It will be unique across all A-SBCs and works for offer-less INVITE scenarios as well.

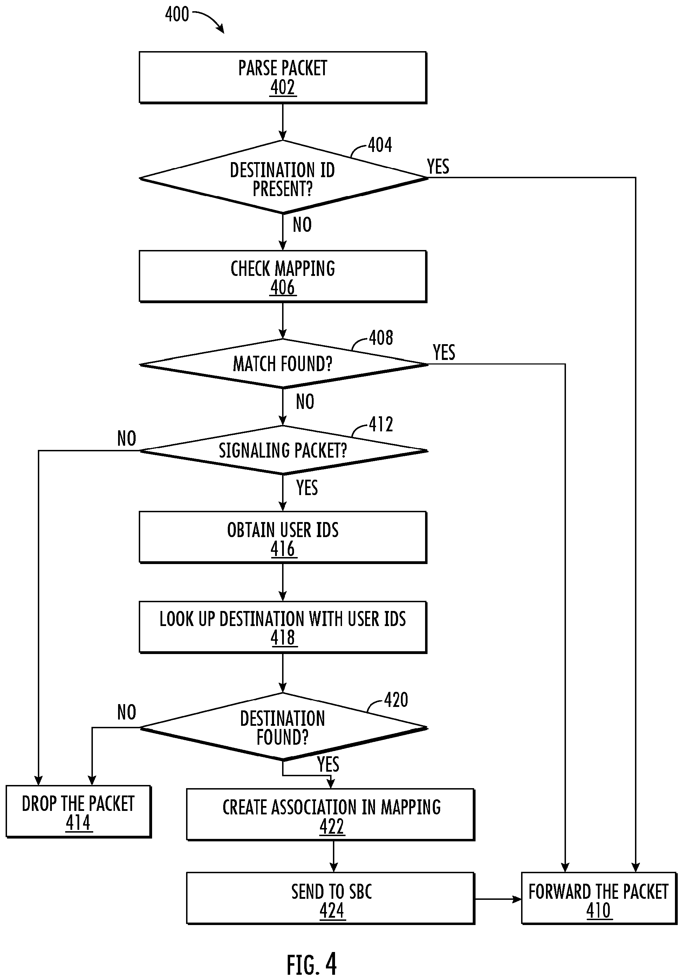

Figure 4 is a flow diagram of an example method **400** for routing of packets for lawful interception at an example forwarding function.

Method **400** illustrates improved forwarding logic at the forwarding function, which is realized by:
- Sending back an LI-MS identifier (MS-ID) from the forwarding function to SBCs after destination lookup is performed for the first packet of a new media stream; and
- Storing this MS-ID at A-SBC and sending it along with Correlation ID in each subsequent packet for that media stream towards the forwarding function.

Upon the arrival of a packet, the forwarding function looks for the presence of MS-ID in the outer packet (e.g. IPFIX). If it is present, the packet can be directly forwarded towards the relevant LI-MS without having to do the Correlation ID lookup or parsing the embedded packet. Any packets that arrive at the forwarding function without the MS-ID can fall back to Correlation ID lookup.

Method **400** includes parsing a packet **(402)** and determining whether a destination identifier (e.g., the MS-ID referred to in other parts of this specification) is present in the packet **(404).** If the destination identifier is present, then method **400** includes forwarding the packet to a lawful intercept mediation server identified by the destination identifier **(410).**

If the destination identifier is not found, method **400** includes checking a mapping of correlation identifiers to lawful intercept mediation servers for an entry for a correlation identifier in the packet **(406).** If a match is found in the mapping of correlation identifiers to lawful intercept mediation servers, then method **400** includes forwarding the packet to a lawful intercept mediation server identified in the entry for the correlation identifier in the packet.

If a match is not found, method **400** includes determining whether or not the packet is a signaling packet, e.g., whether or not the packet is an SIP packet **(412).** If the packet is not a signaling packet, then method **400** includes dropping the packet **(414).** If the packet is a signaling packet, method **400** includes obtaining, from the packet, an originating user identity for the packet and a terminating user identity for the packet **(416).**

Method **400** includes performing a destination lookup in a destination table with one of the user identities as the key **(418).** The destination table specifies lawful intercept mediation servers for different countries. Method **400** includes determining if a destination lawful intercept mediation server is found **(420).**

If a destination lawful intercept mediation server is found, method **400** includes creating an association between the correlation identifier for the packet and the destination lawful intercept mediation server in the mapping of correlation identifiers to lawful intercept mediation servers **(422),** sending a mediation server identifier identifying the destination lawful intercept mediation server to the SBC **(424),** and forwarding the packet to the destination lawful intercept mediation server **(410).**

If a destination lawful intercept mediation server is not found, method **400** includes dropping the packet **414.**

Although specific examples and features have been described above, these examples and features are not intended to limit the scope of the present disclosure, even where only a single example is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed in this specification (either explicitly or implicitly), or any generalization of features disclosed, whether or not such features or generalizations mitigate any or all of the problems described in this specification. Accordingly, new claims may be formulated during prosecution of this application (or an application claiming priority to this application) to any such combination of features.

## Claims

1. A system (100; 200) for routing of packets for lawful interception, the system comprising:
at least one session border controller, SBC, (110; 204; 302) wherein the at least one SBC is configured for forwarding a plurality of media streams to a forwarding function (112; 208; 308); and
the forwarding function, implemented on a centralized node for a telecommunications network (102), the centralized node comprising one or more processors, wherein the forwarding function is configured for receiving the plurality of media streams and forwarding each media stream to a respective lawful intercept mediation server (114, 116, 118; 210, 212; 314) for at least one country associated with the media stream;
wherein the forwarding function is configured for, in response to receiving a first packet (304) of a first media stream from the at least one SBC, performing a destination lookup for the first media stream and sending a mediation server identifier for the first media stream to the at least one SBC; and
wherein the at least one SBC is configured for storing the mediation server identifier and sending the mediation server identifier to the forwarding function with each subsequent packet of a plurality of subsequent packets for the first media stream.

2. The system of claim 1, wherein the forwarding function is configured for, in response to receiving the subsequent packets, using the mediation server identifier to route each subsequent packet of the subsequent packets to a first lawful intercept mediation server identified by the mediation server identifier.

3. The system of claim 1 or claim 2, wherein the at least one SBC is configured for sending, with the first packet and the subsequent packets of the first media stream, a first correlation identifier for the first media stream.

4. The system of claim 3, wherein the forwarding function is configured for associating the first correlation identifier for the first media stream to the mediation server identifier in a mapping of correlation identifiers to the lawful intercept mediation servers.

5. The system of claim 4, wherein the forwarding function is configured for, in response to receiving a second packet (306) including a second correlation identifier and lacking a mediation server identifier, using the mapping of correlation identifiers to route the second packet to a second lawful intercept mediation server associated with the second correlation identifier in the mapping of correlation identifiers.

6. The system of any of the preceding claims, wherein the first packet of the first media stream is a signaling packet establishing the first media stream and wherein each subsequent packet of the subsequent packets is a media packet.

7. The system of any of the preceding claims, wherein the at least one SBC is an access SBC configured for providing access to a telecommunications service provider access network.

8. A system (100; 200) for routing of packets for lawful interception, the system comprising:
At least one session border controller, SBC (110; 204; 302), wherein the at least one SBC is configured for forwarding a plurality of media streams to a forwarding function (112; 208; 308); and
the forwarding function, implemented on a centralized node for a telecommunications network (102), the centralized node comprising one or more processors, wherein the forwarding function is configured for receiving the plurality of media streams and forwarding each media stream to a respective lawful intercept mediation server (114, 116, 118; 210, 212; 314) for at least one country associated with the media stream;
wherein the at least one SBC is configured for sending, with a first packet and a plurality of subsequent packets of a first media stream, a first correlation identifier for the first media stream;
wherein the forwarding function is configured for, in response to receiving the first packet, performing a destination lookup for the first media stream and associating the first correlation identifier for the first media stream to a mediation server identifier in a mapping of correlation identifiers to the lawful intercept mediation servers; and
wherein the at least one SBC is configured for sending a second packet of the first media stream with a session release indicator to the forwarding function in response to determining that the first media stream is terminating.

9. The system of claim 8, wherein the forwarding function is configured for receiving the session release indicator and, in response to receiving the session release indicator, deleting an association between the first correlation identifier for the first media stream and the mediation server identifier in the mapping of correlation identifiers to the lawful intercept mediation servers.

10. The system of claim 8 or claim 9, wherein the forwarding function is configured for, in response to receiving the subsequent packets, using the mediation server identifier to route each subsequent packet of the subsequent packets to a first lawful intercept mediation server identified by the mediation server identifier.

11. The system of any of claims 8 to 10, wherein the forwarding function is configured for, in response to receiving a second packet including a second correlation identifier and lacking a mediation server identifier, using the mapping of correlation identifiers to route the second packet to a second lawful intercept mediation server associated with the second correlation identifier in the mapping of correlation identifiers.

12. The system of any of claims 8 to 11, wherein the first packet of the first media stream is a signaling packet establishing the first media stream and wherein each subsequent packet of the subsequent packets is a media packet.

13. The system of any of claims 8 to 12, wherein the at least one SBC is an access SBC configured for providing access to a telecommunications service provider access network.

14. A system (100; 200) for routing of packets for lawful interception, the system comprising:
at least one session border controller, SBC (110; 204; 302), wherein the at least one SBC is configured for forwarding a plurality of media streams to a forwarding function (112; 208; 308); and
the forwarding function, implemented on a centralized node for a telecommunications network (102), the centralized node comprising one or more processors, wherein the forwarding function is configured for receiving the plurality of media streams and forwarding each media stream to a respective lawful intercept mediation server (114, 116, 118; 210, 212; 314) for at least one country associated with the media stream;
wherein the at least one SBC is configured for sending, with a first packet of a first media stream, a first direction indicator to the forwarding function, the first direction indicator specifying whether first packet is an inbound initial request or an outbound initial request;
wherein the forwarding function is configured for, in response to receiving the first packet, performing a destination lookup for the first media stream using the first direction indicator and sending a mediation server identifier for the first media stream to the at least one SBC, wherein the mediation server identifier identifies a first lawful intercept mediation server found by a destination lookup.

15. The system of claim 14, wherein the at least one SBC is configured for sending, with the first packet and a plurality of subsequent packets of a first media stream, a first correlation identifier for the first media stream, wherein the forwarding function is configured for, in response to receiving the first packet, associating the first correlation identifier for the first media stream to a mediation server identifier in a mapping of correlation identifiers to the lawful intercept mediation servers, and wherein the forwarding function is configured for, in response to receiving the subsequent packets, using the mediation server identifier to route each subsequent packet of the subsequent packets to a first lawful intercept mediation server identified by the mediation server identifier.

## Patentansprüche

1. System (100; 200) zur Weiterleitung von Paketen zum Zwecke der rechtmäßigen Überwachung, wobei das System umfasst:
mindestens einen Session Border Controller (SBC) (110; 204; 302) wobei der mindestens eine SBC so konfiguriert ist, dass er eine Vielzahl von Medienströmen an eine Weiterleitungsfunktion (112; 208; 308) weiterleitet; und
die Weiterleitungsfunktion, die auf einem zentralisierten Knoten für ein Telekommunikationsnetzwerk (102) implementiert ist, wobei der zentralisierte Knoten einen oder mehrere Prozessoren umfasst, wobei die Weiterleitungsfunktion dafür konfiguriert ist, die Vielzahl von Medienströmen zu empfangen und jeden Medienstrom an einen jeweiligen Vermittlungsserver für die rechtmäßige Überwachung (114, 116, 118; 210, 212; 314) für mindestens ein Land, das dem Medienstrom zugeordnet ist, weiterzuleiten;
wobei die Weiterleitungsfunktion dafür konfiguriert ist, eine Zielsuche für den ersten Medienstrom durchzuführen, als Reaktion auf den Empfang eines ersten Pakets (304) eines ersten Medienstroms von dem mindestens einen SBC, und eine Vermittlungsserverkennung für den ersten Medienstrom an den mindestens einen SBC zu senden; und
wobei der mindestens eine SBC so konfiguriert ist, dass er die Vermittlungsserverkennung speichert und die Vermittlungsserverkennung mit jedem nachfolgenden Paket einer Vielzahl von nachfolgenden Paketen für den ersten Medienstrom an die Weiterleitungsfunktion sendet.

2. System nach Anspruch 1, wobei die Weiterleitungsfunktion als Reaktion auf den Empfang der nachfolgenden Pakete so konfiguriert ist, dass sie die Vermittlungsserverkennung verwendet, um jedes nachfolgende Paket der nachfolgenden Pakete an einen ersten Vermittlungsserver für rechtmäßige Überwachung weiterzuleiten, der durch die Vermittlungsserverkennung identifiziert wird.

3. System nach Anspruch 1 oder Anspruch 2, wobei der mindestens eine SBC so konfiguriert ist, dass er zusammen mit dem ersten Paket und den nachfolgenden Paketen des ersten Medienstroms eine erste Korrelationskennung für den ersten Medienstrom sendet.

4. System nach Anspruch 3, wobei die Weiterleitungsfunktion so konfiguriert ist, dass sie die erste Korrelationskennung für den ersten Medienstrom der Vermittlungsserverkennung in einer Zuordnung von Korrelationskennungen zu den Vermittlungsservern für die rechtmäßige Überwachung zuordnet.

5. System nach Anspruch 4, wobei als Reaktion auf den Empfang eines zweiten Pakets (306), das eine zweite Korrelationskennung enthält und keine Vermittlungsserverkennung enthält, die Weiterleitungsfunktion so konfiguriert ist, dass sie die Zuordnung von Korrelationskennungen verwendet, um das zweite Paket an einen zweiten Vermittlungsserver für die rechtmäßige Überwachung weiterzuleiten, der in der Zuordnung von Korrelationskennungen der zweiten Korrelationskennung zugeordnet ist.

6. System nach einem der vorhergehenden Ansprüche, wobei das erste Paket des ersten Medienstroms ein Signalisierungspaket ist, das den ersten Medienstrom aufbaut, und wobei jedes nachfolgende Paket der nachfolgenden Pakete ein Medienpaket ist.

7. System nach einem der vorhergehenden Ansprüche, wobei der mindestens eine SBC ein Zugangs-SBC ist, der so konfiguriert ist, dass er Zugang zu einem Zugangsnetzwerk eines Telekommunikationsdienstanbieters bereitstellt.

8. System (100; 200) zur Weiterleitung von Paketen zum Zwecke der rechtmäßigen Überwachung, wobei das System umfasst:
mindestens einen Session Border Controller (SBC) (110; 204; 302) wobei der mindestens eine SBC so konfiguriert ist, dass er eine Vielzahl von Medienströmen an eine Weiterleitungsfunktion (112; 208; 308) weiterleitet; und
die Weiterleitungsfunktion, die auf einem zentralisierten Knoten für ein Telekommunikationsnetzwerk (102) implementiert ist, wobei der zentralisierte Knoten einen oder mehrere Prozessoren umfasst, wobei die Weiterleitungsfunktion dafür konfiguriert ist, die Vielzahl von Medienströmen zu empfangen und jeden Medienstrom an einen jeweiligen Vermittlungsserver für die rechtmäßige Überwachung (114, 116, 118; 210, 212; 314) für mindestens ein Land, das dem Medienstrom zugeordnet ist, weiterzuleiten;
wobei der mindestens eine SBC so konfiguriert ist, dass er zusammen mit einem ersten Paket und einer Vielzahl von nachfolgenden Paketen eines ersten Medienstroms eine erste Korrelationskennung für den ersten Medienstrom sendet;
wobei die Weiterleitungsfunktion als Reaktion auf den Empfang des ersten Pakets so konfiguriert ist, dass sie eine Zielsuche für den ersten Medienstrom durchführt und die erste Korrelationskennung für den ersten Medienstrom einer Vermittlungsserverkennung in einer Zuordnung von Korrelationskennungen zu den Vermittlungsservern für die rechtmäßige Überwachung zuordnet; und
wobei der mindestens eine SBC so konfiguriert ist, dass er als Reaktion auf das Bestimmen, dass der erste Medienstrom endet, ein zweites Paket des ersten Medienstroms mit einem Sitzungsbeendigungsindikator an die Weiterleitungsfunktion sendet.

9. System nach Anspruch 8, wobei die Weiterleitungsfunktion so konfiguriert ist, dass sie den Sitzungsbeendigungsindikator empfängt und, als Reaktion auf den Empfang des Sitzungsbeendigungsindikators eine Zuordnung zwischen der ersten Korrelationskennung für den ersten Medienstrom und der Vermittlungsserverkennung in der Zuordnung von Korrelationskennungen zu den Vermittlungsservern für die rechtmäßige Überwachung löscht.

10. System nach Anspruch 8 oder Anspruch 9, wobei die Weiterleitungsfunktion als Reaktion auf den Empfang der nachfolgenden Pakete so konfiguriert ist, dass sie die Vermittlungsserverkennung verwendet, um jedes nachfolgende Paket der nachfolgenden Pakete an einen ersten Vermittlungsserver für rechtmäßige Überwachung weiterzuleiten, der durch die Vermittlungsserverkennung identifiziert wird.

11. System nach einem der Ansprüche 8 bis 10, wobei als Reaktion auf den Empfang eines zweiten Pakets (306), das eine zweite Korrelationskennung enthält und keine Vermittlungsserverkennung enthält, die Weiterleitungsfunktion so konfiguriert ist, dass sie die Zuordnung von Korrelationskennungen verwendet, um das zweite Paket an einen zweiten Vermittlungsserver für die rechtmäßige Überwachung weiterzuleiten, der in der Zuordnung von Korrelationskennungen der zweiten Korrelationskennung zugeordnet ist.

12. System nach einem der Ansprüche 8 bis 11, wobei das erste Paket des ersten Medienstroms ein Signalisierungspaket ist, das den ersten Medienstrom aufbaut, und wobei jedes nachfolgende Paket der nachfolgenden Pakete ein Medienpaket ist.

13. System nach einem der Ansprüche 8 bis 12, wobei der mindestens eine SBC ein Zugangs-SBC ist, der so konfiguriert ist, dass er Zugang zu einem Zugangsnetzwerk eines Telekommunikationsdienstanbieters bereitstellt.

14. System (100; 200) zur Weiterleitung von Paketen zum Zwecke der rechtmäßigen Überwachung, wobei das System umfasst:
mindestens einen Session Border Controller (SBC) (110; 204; 302) wobei der mindestens eine SBC so konfiguriert ist, dass er eine Vielzahl von Medienströmen an eine Weiterleitungsfunktion (112; 208; 308) weiterleitet; und
die Weiterleitungsfunktion, die auf einem zentralisierten Knoten für ein Telekommunikationsnetzwerk (102) implementiert ist, wobei der zentralisierte Knoten einen oder mehrere Prozessoren umfasst, wobei die Weiterleitungsfunktion dafür konfiguriert ist, die Vielzahl von Medienströmen zu empfangen und jeden Medienstrom an einen jeweiligen Vermittlungsserver für die rechtmäßige Überwachung (114, 116, 118; 210, 212; 314) für mindestens ein Land, das dem Medienstrom zugeordnet ist, weiterzuleiten;
wobei der mindestens eine SBC so konfiguriert ist, dass er mit einem ersten Paket eines ersten Medienstroms einen ersten Richtungsindikator an die Weiterleitungsfunktion sendet, wobei der erste Richtungsindikator angibt, ob das erste Paket eine eingehende Anfangsanfrage oder eine ausgehende Anfangsanfrage ist;
wobei die Weiterleitungsfunktion als Reaktion auf den Empfang des ersten Pakets so konfiguriert ist, dass sie unter Verwendung des ersten Richtungsindikators eine Zielsuche für den ersten Medienstrom durchführt und eine Vermittlungsserverkennung für den ersten Medienstrom an den mindestens einen SBC sendet, wobei die Vermittlungsserverkennung einen ersten Vermittlungsserver für die rechtmäßige Überwachung identifiziert, der durch eine Zielsuche gefunden wurde.

15. System nach Anspruch 14, wobei der mindestens eine SBC so konfiguriert ist, dass er zusammen mit dem ersten Paket und einer Vielzahl von nachfolgenden Paketen eines ersten Medienstroms eine erste Korrelationskennung für den ersten Medienstrom sendet, wobei, als Reaktion auf den Empfang des ersten Pakets, die Weiterleitungsfunktion so konfiguriert ist, dass sie die erste Korrelationskennung für den ersten Medienstrom einer Vermittlungsserverkennung in einer Zuordnung von Korrelationskennungen zu den Vermittlungsservern für die rechtmäßige Überwachung zuordnet, und wobei die Weiterleitungsfunktion als Reaktion auf den Empfang der nachfolgenden Pakete so konfiguriert ist, dass sie die Vermittlungsserverkennung verwendet, um jedes nachfolgende Paket der nachfolgenden Pakete an einen ersten Vermittlungsserver für rechtmäßige Überwachung weiterzuleiten, der durch die Vermittlungsserverkennung identifiziert wird.

## Revendications

1. Système (100 ; 200) servant à acheminer des paquets en vue d'une interception légale, le système comportant :
au moins un contrôleur SBC (session border controller - contrôleur de session en périphérie) (110 ; 204 ; 302), dans lequel ledit au moins un contrôleur SBC est configuré pour transmettre une pluralité de flux multimédia à une fonction de transmission (112 ; 208 ; 308) ; et
la fonction de transmission, mise en œuvre sur un nœud centralisé pour un réseau de télécommunications (102), le nœud centralisé comportant un ou plusieurs processeurs, dans lequel la fonction de transmission est configurée pour recevoir la pluralité de flux multimédia et pour transmettre chaque flux multimédia à un serveur de médiation d'interception légale respectif (114, 116, 118 ; 210, 212 ; 314) pour au moins un pays associé au flux multimédia ;
dans lequel la fonction de transmission est configurée pour, en réponse à la réception d'un premier paquet (304) d'un premier flux multimédia en provenance dudit au moins un contrôleur SBC, effectuer une consultation de destination pour le premier flux multimédia et pour envoyer un identificateur de serveur de médiation pour le premier flux multimédia audit au moins un contrôleur SBC ; et
dans lequel ledit au moins un contrôleur SBC est configuré pour stocker l'identificateur de serveur de médiation et pour envoyer l'identificateur de serveur de médiation à la fonction de transmission avec chaque paquet suivant d'une pluralité de paquets suivants pour le premier flux multimédia.

2. Système selon la revendication 1, dans lequel la fonction de transmission est configurée pour, en réponse à la réception des paquets suivants, utiliser l'identificateur de serveur de médiation pour acheminer chaque paquet suivant des paquets suivants vers un premier serveur de médiation d'interception légale identifié par l'identificateur de serveur de médiation.

3. Système selon la revendication 1 ou la revendication 2, dans lequel ledit au moins un contrôleur SBC est configuré pour envoyer, avec le premier paquet et les paquets suivants du premier flux multimédia, un premier identificateur de corrélation pour le premier flux multimédia.

4. Système selon la revendication 3, dans lequel la fonction de transmission est configurée pour associer le premier identificateur de corrélation pour le premier flux multimédia à l'identificateur de serveur de médiation dans une mise en correspondance d'identificateurs de corrélation avec les serveurs de médiation d'interception légale.

5. Système selon la revendication 4, dans lequel la fonction de transmission est configurée pour, en réponse à la réception d'un deuxième paquet (306) comprenant un deuxième identificateur de corrélation et manquant un identificateur de serveur de médiation, utiliser la mise en correspondance d'identificateurs de corrélation pour acheminer le deuxième paquet vers un deuxième serveur de médiation d'interception légale associé au deuxième identificateur de corrélation dans la mise en correspondance d'identificateurs de corrélation.

6. Système selon l'une quelconque des revendications précédentes, dans lequel le premier paquet du premier flux multimédia est un paquet de signalisation qui établit le premier flux multimédia et dans lequel chaque paquet suivant des paquets suivants est un paquet multimédia.

7. Système selon l'une quelconque des revendications précédentes, dans lequel ledit au moins un contrôleur SBC est un contrôleur SBC d'accès configuré pour fournir un accès à un réseau d'accès de fournisseur de services de télécommunications.

8. Système (100 ; 200) servant à acheminer des paquets en vue d'une interception légale, le système comportant :
au moins un contrôleur SBC (session border controller - contrôleur de session en périphérie) (110 ; 204 ; 302), dans lequel ledit au moins un contrôleur SBC est configuré pour transmettre une pluralité de flux multimédia à une fonction de transmission (112 ; 208 ; 308) ; et
la fonction de transmission, mise en œuvre sur un nœud centralisé pour un réseau de télécommunications (102), le nœud centralisé comportant un ou plusieurs processeurs, dans lequel la fonction de transmission est configurée pour recevoir la pluralité de flux multimédia et pour transmettre chaque flux multimédia à un serveur de médiation d'interception légale respectif (114, 116, 118 ; 210, 212 ; 314) pour au moins un pays associé au flux multimédia ;
dans lequel ledit au moins un contrôleur SBC est configuré pour envoyer, avec un premier paquet et une pluralité de paquets suivants d'un premier flux multimédia, un premier identificateur de corrélation pour le premier flux multimédia ;
dans lequel la fonction de transmission est configurée pour, en réponse à la réception du premier paquet, effectuer une consultation de destination pour le premier flux multimédia et associer le premier identificateur de corrélation pour le premier flux multimédia à un identificateur de serveur de médiation dans une mise en correspondance d'identificateurs de corrélation avec les serveurs de médiation d'interception légale ; et
dans lequel ledit au moins un contrôleur SBC est configuré pour envoyer un deuxième paquet du premier flux multimédia avec un indicateur de libération de session à la fonction de transmission en réponse à la détermination comme quoi le premier flux multimédia est en train de se terminer.

9. Système selon la revendication 8, dans lequel la fonction de transmission est configurée pour recevoir l'indicateur de libération de session et, en réponse à la réception de l'indicateur de libération de session, supprimer une association entre le premier identificateur de corrélation pour le premier flux multimédia et l'identificateur de serveur de médiation dans la mise en correspondance d'identificateurs de corrélation avec les serveurs de médiation d'interception légale.

10. Système selon la revendication 8 ou la revendication 9, dans lequel la fonction de transmission est configurée pour, en réponse à la réception des paquets suivants, utiliser l'identificateur de serveur de médiation pour acheminer chaque paquet suivant des paquets suivants vers un premier serveur de médiation d'interception légale identifié par l'identificateur de serveur de médiation.

11. Système selon l'une quelconque des revendications 8 à 10, dans lequel la fonction de transmission est configurée pour, en réponse à la réception d'un deuxième paquet comprenant un deuxième identificateur de corrélation et manquant un identificateur de serveur de médiation, utiliser la mise en correspondance d'identificateurs de corrélation pour acheminer le deuxième paquet vers un deuxième serveur de médiation d'interception légale associé au deuxième identificateur de corrélation dans la mise en correspondance d'identificateurs de corrélation.

12. Système selon l'une quelconque des revendications 8 à 11, dans lequel le premier paquet du premier flux multimédia est un paquet de signalisation qui établit le premier flux multimédia et dans lequel chaque paquet suivant des paquets suivants est un paquet multimédia.

13. Système selon l'une quelconque des revendications 8 à 12, dans lequel ledit au moins un contrôleur SBC est un contrôleur SBC d'accès configuré pour fournir un accès à un réseau d'accès de fournisseur de services de télécommunications.

14. Système (100 ; 200) servant à acheminer des paquets en vue d'une interception légale, le système comportant :
au moins un contrôleur SBC (session border controller - contrôleur de session en périphérie) (110 ; 204 ; 302), dans lequel ledit au moins un contrôleur SBC est configuré pour transmettre une pluralité de flux multimédia à une fonction de transmission (112 ; 208 ; 308) ; et
la fonction de transmission, mise en œuvre sur un nœud centralisé pour un réseau de télécommunications (102), le nœud centralisé comportant un ou plusieurs processeurs, dans lequel la fonction de transmission est configurée pour recevoir la pluralité de flux multimédia et pour transmettre chaque flux multimédia à un serveur de médiation d'interception légale respectif (114, 116, 118 ; 210, 212 ; 314) pour au moins un pays associé au flux multimédia ;
dans lequel ledit au moins un contrôleur SBC est configuré pour envoyer, avec un premier paquet d'un premier flux multimédia, un premier indicateur de direction à la fonction de transmission, le premier indicateur de direction spécifiant si le premier paquet est une demande initiale entrante ou une demande initiale sortante ;
dans lequel la fonction de transmission est configurée pour, en réponse à la réception du premier paquet, effectuer une consultation de destination pour le premier flux multimédia à l'aide du premier indicateur de direction et pour envoyer un identificateur de serveur de médiation pour le premier flux multimédia audit au moins un contrôleur SBC, dans lequel l'identificateur de serveur de médiation identifie un premier serveur de médiation d'interception légale trouvé par une consultation de destination.

15. Système selon la revendication 14, dans lequel ledit au moins un contrôleur SBC est configuré pour envoyer, avec le premier paquet et une pluralité de paquets suivants d'un premier flux multimédia, un premier identificateur de corrélation pour le premier flux multimédia, dans lequel la fonction de transmission est configurée pour, en réponse à la réception du premier paquet, associer le premier identificateur de corrélation pour le premier flux multimédia à un identificateur de serveur de médiation dans une mise en correspondance d'identificateurs de corrélation avec les serveurs de médiation d'interception légale, et dans lequel la fonction de transmission est configurée pour, en réponse à la réception des paquets suivants, utiliser l'identificateur de serveur de médiation pour acheminer chaque paquet suivant des paquets suivants vers un premier serveur de médiation d'interception légale identifié par l'identificateur de serveur de médiation.
